# EUROPÄISCHE PATENTSCHRIFT

(11) **EP 0 338 320 B1**
(45) Veröffentlichungstag und Bekanntmachung des Hinweises auf die Patenterteilung: **03.11.1993**
(21) Anmeldenummer: 89105965.1
(22) Anmeldetag: 05.04.1989
(51) Int. Cl.: C08K 5/05, C08L 61/28

(54) **Latenter Härter für Melaminharz-Formmassen**
Latent curing agent for melamine resin moulding masses
Durcisseur latent pour masses de moulage à base de résines mélamine

(30) Priorität: 08.04.1988 CH 1296/88
(43) Veröffentlichungstag der Anmeldung: 25.10.1989
(73) Patentinhaber: Raschig Aktiengesellschaft, D-67061 Ludwigshafen (DE)
(72) Erfinder: Günther, Peter, Dr., D-6140 Bensheim (DE); Wirth, Hermann O., Dr., D-6140 Bensheim 3 (DE); Endlich, Wilhelm, D-6148 Heppenheim (DE)

(56) Entgegenhaltungen:
- US-A- 3 745 099
- CHEMICAL ABSTRACTS, Bnd. 82, Nr. 17, 28. April 1975, Seite 439, Zusammenfassung 111201d, Columbus, Ohio, US; J. MYSZKOWSKI et al.: "Decomposition reactions of chlorohydrins in an acidic medium", & CHEM. STOSOW. 1974, 18(2),225-43
- Encyclopedia of Polymer Science and Engineering, Vol. 1, p. 766-770, John Wiley & Sons, 1985

## Beschreibung

Die Erfindung betrifft Spritzgussformmassen auf Basis von Melaminharzen, welche 3-Chlor-1,2-propandiol als latenten Härter enthalten, die Verwendung dieser Massen zur Herstellung von Formkörpern mittels Spritzguss sowie die so hergestellten Formkörper.

Formmassen auf Basis von Melamin-Formaldehyd-Harz (MF-Harz) oder Melamin-Phenol-Formaldehyd-Harz (MPF-Harz) sind wohlbekannt und werden seit vielen Jahren in weitem Umfang verwendet. Es hat sich jedoch als schwierig erwiesen, für den Spritzguss geeignete Massen herzustellen. Erwünscht sind dabei Formmassen, welche bei den Verarbeitungstemperaturen während der Compoundierung sowie bei den üblichen Temperaturen im Zylinder der Spritzgussmaschine möglichst inert sind und dadurch eine möglichst lange "pot-life" aufweisen, welche aber gleichzeitig bei der Werkzeugtemperatur der Spritzgussmaschine moglichst rasch aushärten und somit kurze Zykluszeiten und eine wirtschaftliche Herstellung von Formteilen ermöglichen.

Eine Vielzahl sogenannter "latenter" säureabspaltender Härter für Melaminharze ist bekannt, jedoch erfüllt keiner die Anforderungen völlig zufriedenstellend - entweder ist die Stabilität der Formmassen ungenügend oder die Wirkung des Härters in der Form ist zu langsam. Ein weiterer Nachteil ist die dadurch beeinträchtigte Fliessfähigkeit der Formmasse. Einige der bekannten Härter sind auch aus toxikologischen Gründen bedenklich, da sich z.B. während der Härtung giftige gasförmige Produkte bilden.

Gegenstand der Erfindung sind Spritzgussformmassen enthaltend
(a) ein Melamin-Formaldehyd-Harz, ein Melamin-Phenol-Formaldehyd-Harz oder ein Gemisch dieser Harze,
(b) organische und/oder anorganische Füllstoffe,
(c) Gleitmittel und
(d) 0,1 bis 2 Gew.%, bezogen auf die Gesamtmasse, 3-Chlor-1,2-propandiol als latenten Härter.

Der erfindungsgemäss verwendete latente Härter verleiht den Formmassen die für die Verarbeitung mittels Spritzguss erwünschten Eigenschaften und ermöglicht extrem kurze Zykluszeiten gekoppelt mit langen möglichen Verweilzeiten bei Zylindertemperatur der Spritzgussmaschine. Die Formmassen zeichnen sich zudem durch sehr gute Fliessfähigkeit aus.

3-Chlor-1,2-propandiol ist auch unter dem Namen Glycerin-a-monochlorhydrin bekannt und ist beispielsweise in Kirk-Othmer, Encyclopedia of Chemical Technology, Band 5, Seiten 854 ff. (3. Ausgabe 1979, Wiley-Interscience) beschrieben. Das Produkt ist auch im Handel erhältlich. So wird es auch von Shell Fine Chemicals, London (Technical Bulletin, FC:64:1:TB, 2^{nd} Edition) als vielseitiges Zwischenprodukt für die Verwendung in der pharmazeutischen Industrie, bei der Polymerherstellung, bei der Textil-und Metallverarbeitung sowie für diverse andere Anwendungen empfohlen. Eine der erwähnten verschiedenen Anwendungen bei der Polymerherstellung ist auch als Katalysator für Melamin-Formmassen, ohne dass dazu nähere Angaben gemacht werden.

Die US-A-3,745,099 beschreibt die Verwendung von Reaktionsprodukten von Melamin und Formaldehyd als Aufheller bei der galvanischen Abscheidung von Zink aus alkalischen elektrolytischen Bädern. Die in den elektrolytischen Bädern löslichen Melaminharze können unter anderem auch in Anwesenheit von grösseren Mengen Glycerin-a-monochlorhydrin (vorzugsweise 1,5 bis 3,5 Mol pro Mol Melamin) hergestellt werden.

Glycerin-a-monochlorhydrinphenylether wird neben anderen Verbindungen von Z. Wirpsza et al. in Polimery (Warschau), 1974, 19(9), 441-443 als Katalysator bei der Härtung von Melamin-Formmassen beschrieben.

Auch Glycerindichlorhydrin (1,3-Dichlor-2-propanol) ist z.B. aus der US-A-2,930,727 als Härter für Melamin-Formaldehyd-Harze bei der Herstellung von Laminaten bekannt.

Die US-A-3,317,474 beschreibt latente Härter für säurekatalysierte Reaktionen, z.B. auch für die Härtung von Harnstoff-Formaldehyd-, Melamin-Formaldehyd- oder Phenol-Formaldehyd-Harzen, der Formel 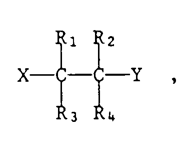 worin X der Rest einer starken Säure, z.B. der Salzsäure, und Y eine Lewis-Base sind. Der Rest Y kann dabei Stickstoff-, Sauerstoff- oder Schwefelatome enthalten, wobei Aminreste als Lewis-Basen bevorzugt und als einzige offenbart sind.

Als Melamin-Formaldehyd-Harze oder Melamin-Phenol-Formaldehyd-Harze kommen alle entsprechenden, dem Fachmann an sich bekannten Harze in Frage. Die Harze werden üblicherweise durch Kondensation von Melamin, Formaldehyd und gegebenenfalls Phenol im wässrig alkalischen Medium hergestellt. Anschliessend an die Kondensation wird das Harz getrocknet, d.h. das überschüssige Wasser wird entfernt. In der Formmasse kann das Harz dann beispielsweise in Form von Harzschuppen eingesetzt werden. Das Molverhältnis von Melamin zu Formaldehyd in den Harzen liegt z.B. im Bereich von 1:1,5 bis 1:3, vorzugsweise von 1:1,5 bis 1:2,5. Am meisten bevorzugt werden Harze mit einem Molverhältnis von Melamin zu Formaldehyd im Bereich von 1:1,6 bis 1:2.

Wenn das Harz ein ternäres Melamin-Phenol-Formaldehyd-Harz ist, werden vorzugsweise Harze verwendet, welche 0,1 bis 0,4, insbesondere 0,15 bis 0,20 Mol Phenol pro Mol Melamin enthalten.

Die erfindungsgemässen Formmassen enthalten vorzugsweise 35 bis 70, insbesondere 45 bis 55, Gew.% des Melamin-Harzes (a) bezogen auf das Gesamtgewicht der Masse. Das Harz hat vorzugsweise ein Molekulargewicht von unter 5000, insbesondere von bis 2000.

Die erfindungsgemässen Formmassen enthalten organische oder anorganische Füllstoffe, oder vorzugsweise sowohl organische als auch anorganische Füllstoffe. Als Füllstoffe lassen sich im Prinzip alle unlöslichen festen Stoffe verwenden, welche in feinkörnigem oder faserförmigem Zustand vorliegen und keine chemische Beeinträchtigung der Harze bewirken. Bevorzugte organische Füllstoffe sind z.B. Holzmehl und insbesondere Cellulose. Je nach Anforderungsprofil können die Formmassen nur Holzmehl, nur Cellulose oder auch beide Füllstoffe enthalten. Die Menge des organischen Füllstoffs beträgt vorzugsweise 0 bis 40, insbesondere 20 bis 30, Gew.% bezogen auf die Gesamtmasse.

Beispiele geeigneter anorganische Füllstoffe sind Calciumcarbonat, z.B. als Kreide oder Kalkspat, Bariumsulfat, Lithopone, Aluminiumhydroxid, Silikate, wie z.B. Talk, Glimmer, Kaolin oder Wollastonit, Glaskugeln, usw. Besonders bevorzugt werden Lithopone, Calciumcarbonat, Bariumsulfat und Kaolin. Die Füllstoffe können einzeln oder auch im Gemisch eingesetzt werden. Die erfindungsgemässen Formmassen können auch verstärkende Füllstoffe, wie z.B. Glasfasern, enthalten. Die anorganischen Füllstoffe werden vorzugsweise in Mengen von 0 bis 30, insbesondere 10 bis 25, Gew.% der Gesamtmasse eingesetzt.

Die Gesamtmenge der organischen und der anorganischen Füllstoffe ist vorzugsweise unter 60, insbesondere unter 50 Gew.% der Gesamtmasse.

Die erfindungsgemässen Formmassen enthalten als Komponente (c) ein Gleitmittel. Es kommen im Prinzip alle für Melamin-Formmassen bekannten Gleitmittel, wie z.B. Wachse, Stearinsäure oder deren Metallsalze, wie Zink-, Aluminium-, Magnesium-oder Calciumstearat, einwertige oder mehrwertige Alkohole, wie z.B. Glycerin in Frage. Bevorzugte Gleitmittel (c) sind Calciumstearat oder Zinkstearat. Die Menge des Gleitmittels beträgt vorzugsweise 0,2 bis 2, insbesondere 0,4 bis 0,8, Gew.% bezogen auf die Gesamtmasse.

Bevorzugt werden erfindungsgemässe Formmassen enthaltend 35 bis 70, vorzugsweise 45 bis 55, Gew.% der Komponente (a), 0 bis 40, vorzugsweise 20 bis 30 Gew.% des organischen Füllstoffs (b) und 0 bis 30, vorzugsweise 10 bis 25, Gew.% des anorganischen Füllstoffs (b), 0,2 bis 2, vorzugsweise 0,4 bis 0,8, Gew.% des Gleitmittels (c) und 0,2 bis 1,5, vorzugsweise 0,3 bis 1,2, insbesondere 0,5 bis 1,0, Gew.% des Härters (d), bezogen auf die Gesamtmasse.

Zusätzlich zu den Komponenten (a) bis (d) können die erfindungsgemässen Formmassen z.B. noch Farbstoffe, Pigmente, Verstärkungsmittel und/oder von Melaminharzen verschiedene Kunststoffe enthalten. Als zusätzliche, von Melaminharzen verschiedene Kunststoffe kommen z.B. ungesättigte Polyester oder Acrylharze in Frage.

Die erfindungsgemässen Formmassen eignen sich besonders für die Herstellung von elektrischen Bauteilen, wie elektrischem Isoliermaterial, Schaltungsteilen, Schaltkammern und Leistungsschutzschaltern sowie Teile von Haushaltgegenständen, wie Griffe, Schaltknöpfe und Lampengehäuse.

Die Formmassen können geeigneterweise durch Zusammenmischen aller Komponenten, gegebenenfalls bei erhöhter Temperatur, z.B. bei 80-120 °C in einem Cokneter, und anschliessendes Vermahlen oder Granulierung hergestellt werden.

Die erfindungsgemässen Formmassen eignen sich für die Verarbeitung mittels Spritzguss. Während die üblichen Härter für Melamin-Harze bei Zylindertemperaturen von 100 bis 120_{°}C bereits reagieren und nur eine Verweilzeit im Zylinder von maximal ca. 5 bis 10 Minuten ermöglichen, lassen sich mit dem erfindungsgemäss verwendeten 3-Chlor-1,2-propandiol als latentem Härter problemlos Verweilzeiten von weit über 60 Minuten erreichen. Zudem ist, wegen ihrer Stabilität, bei den erfindungsgemässen Formmassen der sonst übliche Einsatz von Puffern, wie z.B. Natriumoxalat oder Natrium-p-toluolsulfonat, von Inhibitoren, wie z.B. Borax, oder von Stabilisatoren, wie z.B. Triethanolamin, nicht erforderlich. Andererseits setzt die Reaktion bei Formtemperaturen von ca. 160 bis 190 _{°} C sehr rasch ein, so dass die Masse sehr schnell aushärtet und somit kurze bis extrem kurze Härtezeiten (z.B. nur 15 s) bei der Spritzgussverarbeitung möglich sind. Zudem lassen sich sowohl die Viskosität bzw. Fliessfähigkeit als auch die Härtezeit bei der Verarbeitung der Massen fast beliebig einstellen.

Ein weiterer Gegenstand der Erfindung ist daher die Verwendung der erfindungsgemässen Formmassen zur Herstellung von Formkörpern mittels Spritzguss bei Formtemperaturen von 150 bis 200 °C, vorzugsweise von 165 bis 190°C, insbesondere von 170 bis 180°C.

Gegenstand der Erfindung ist auch die Verwendung der vorliegenden Formmassen zur Herstellung von Formkörpern mittels Spritzguss bei Zykluszeiten von 20 bis 50, vorzugsweise 25 bis 35, Sekunden.

Gegenstand der Erfindung sind auch die mittels Spritzguss definitionsgemäss hergestellten Formkörper.

Die folgenden Beispiele erläutern die Erfindung näher.

### Herstellung der Formmassen

In einem Henschel-Mischer wird die angegebene Menge MF- bzw. MPF-Harzschuppen mit den Füllstoffen, dem Gleitmittel, dem Härter und eventuell noch weiteren Komponenten gemischt. Diese Vormischung wird auf einem Laborkneter bei 90/100 ° C geknetet und anschliessend auf einer Zahnscheibenmühle vermahlen.

### Verarbeitung und Bestimmung der Eigenschaften der Formmassen

Nach Bestimmung von Wassergehalt und Fliess-Härtungsverhalten (Brabender) wird das Spritzgussverhalten bei einer Zylindertemperatur (T_{z}yₗ) von 90/100 ° C und einer Werkzeugtemperatur (T_{wz}) von 170/175 °C (Beispiel 2 T_{wz} 180/185 ° C) untersucht.
- Die Härtezeit wird an einem gespritzten LS-Schaltergehäuse (ca. 8x8 cm) bei Shore D = 77-80 bestimmt.
- Die Standzeit im Zylinder bezeichnet die Zeit bis zum Aushärten der Masse beim Verbleiben im Zylinder.

### Beispiel 1:

1750 kg (50 %) MF-Basisharz (M:F = 1:2) 980 kg (28 %) Cellulose
280 kg (8 %) Lithopone
460 kg (13 %) Kreide
14 kg (0,4 %) Calciumstearat
7 kg (0,2 %) Zinkstearat
9 kg (0,26 %) 3-Chlor-1,2-propandiol
Wassergehalt: 3,2 %
Brabender B-Wert: 7,0 Nm
Brabender D-Wert: 267 s
Härtezeit: 30 s
Standzeit im Zylinder: > 60 min

### Beispiel 2:

Beispiel 1 wird unter Erhöhung der Werkzeugtemperatur um 10 C, d.h. bei T_{wz} = 180/185 ° C, wiederholt. Dabei wird die Härtezeit (bei gleich gebliebener Standzeit im Zylinder) von 30 s auf 20 s reduziert.

### Beispiel 3:

Beispiel 1 wird unter Erhöhung der Härtermenge wiederholt.
36 kg (1,02 %) 3-Chlor-1,2-propandiol,
sonst Zusammensetzung wie in Beispel 1.
Wassergehalt: 3,5 %
Brabender B-Wert: 7,0 Nm
Brabender D-Wert: 179 s
Härtezeit: 16 s
Standzeit im Zylinder: < 60 min

### Beispiel 4:

1460 kg (50 %) MF-Basisharz (M:F = 1:2)
850 kg (28 %) Cellulose
360 kg (12 %) Lithopone
270 kg (9 %) Bariumsulfat
10 kg (0,4 %) Calciumstearat
6 kg (0,2 %) Zinkstearat
35 kg (1,17 %) 3-Chlor-1,2-propandiol
Wassergehalt: 4,4 %
Brabender B-Wert: 6,0 Nm
Brabender D-Wert: 174 s
Härtezeit: 14 s
Standzeit im Zylinder: > 60 min

### Beispiel 5:

1640 kg (55 %) MF-Basisharz (M:F = 1:2)
670 kg (22 %) Cellulose
360 kg (12 %) Lithopone
270 kg (9 %) Kaolin
12 kg (0,4 %) Calciumstearat
6 kg (0,2 %) Zinkstearat
35 kg (1,17 %) 3-Chlor-1,2-propandiol
Wassergehalt: 4,0 %
Brabender B-Wert: 5,0 Nm
Brabender D-Wert: 194 s
Härtezeit: 22 s
Standzeit im Zylinder > 60 min

### Beispiel 6:

1745 kg (50 %) MPF-Basisharz (M:P:F 1:0,17:2,5)
970 kg (28 %) Cellulose
350 kg (10 %) Lithopone
350 kg (10 %) Kreide
14 kg (0,4 %) Calciumstearat
7 kg (0,2 %) Zinkstearat
35 kg (1,0 %) 3-Chlor-1,2-propandiol
Wassergehalt: 3,4 %
Brabender B-Wert: 10,0 Nm
Brabender D-Wert: 172 s
Härtezeit: 24 s
Standzeit im Zylinder: > 50 min

## Patentansprüche (Patentansprüche für folgende(n) Vertragsstaat(en) : AT, BE, DE, FR, GB, IT, SE)

1. Spritzgussformmasse enthaltend
a) ein Melamin-Formaldehyd-Harz, ein Melamin-Phenol-Formaldehyd-Harz oder ein Gemisch dieser Harze,
(b) organische und/oder anorganische Füllstoffe,
(c) Gleitmittel und
d) 0,1 bis 2 Gew.%, bezogen auf die Gesamtmasse, 3-Chlor-1,2-propandiol als latenten Härter.

2. Formmasse nach Anspruch 1, worin Komponente (a) ein Molverhältnis von Melamin zu Formaldehyd im Bereich von 1:1,5 bis 1:2,5 aufweist.

3. Formmasse nach Anspruch 2, worin das Molverhältnis von Melamin zu Formaldehyd im Bereich von 1:1,6 bis 1:2 liegt.

4. Formmasse nach einem der Ansprüche 1 bis 3, worin das Melamin-Phenol-Formaldehyd-Harz 0,1 bis 0,4, vorzugsweise 0,15 bis 0,20 Mol Phenol pro Mol Melamin enthält.

5. Formmasse nach Anspruch 1, worin der organische Füllstoff (b) Cellulose und/oder Holzmehl ist.

6. Formmasse nach Anspruch 1, worin der anorganische Füllstoff (b) Lithopone, Calciumcarbonat, Bariumsulfat oder Kaolin ist.

7. Formmasse nach Anspruch 1, worin das Gleitmittel (c) Calciumstearat oder Zinkstearat ist.

8. Formmasse nach Anspruch 1 enthaltend 35 bis 70, vorzugsweise 45 bis 55, Gew.% der Komponente (a), 0 bis 40, vorzugsweise 20 bis 30 Gew.% des organischen Füllstoffs (b) und 0 bis 30, vorzugsweise 10 bis 25, Gew.% des anorganischen Füllstoffs (b), 0,2 bis 2, vorzugsweise 0,4 bis 0,8, Gew.% des Gleitmittels (c) und 0,2 bis 1,5, vorzugsweise 0,3 bis 1,2, Gew.% des Härters (d) bezogen auf die Gesamtmasse.

9. Formmasse nach Anspruch 1, welche zusätzlich zu den Komponenten (a) bis (d) noch Farbstoffe, Pigmente, Verstärkungsmittel und/oder von Melaminharzen verschiedene Kunststoffe enthält.

10. Verwendung der Formmasse nach Anspruch 1 zur Herstellung von Formkörpern mittels Spritzguss bei Formtemperaturen von 150 bis 200 _{°} C, vorzugsweise von 165 bis 190°C.

11. Verwendung der Formmasse nach Anspruch 1 zur Herstellung von Formkörpern mittels Spritzguss bei Zykluszeiten von 20 bis 50, vorzugsweise 25 bis 35, Sekunden.

12. Formkörper hergestellt nach Anspruch 10 oder 11.

## Patentansprüche (Patentansprüche für folgende(n) Vertragsstaat(en) : ES)

1. Verfahren zur Herstellung von gehärteten Produkten durch Erhitzen einer Spritzgussformmasse enthaltend
(a) ein Melamin-Formaldehyd-Harz, ein Melamin-Phenol-Formaldehyd-Harz oder ein Gemisch dieser Harze,
(b) organische und/oder anorganische Füllstoffe,
(c) Gleitmittel und
(d) 0,1 bis 2 Gew.%, bezogen auf die Gesamtmasse, 3-Chlor-1,2-propandiol als latenten Härter, auf eine Temperatur im Bereich von 150 bis 200 ° C.

2. Verfahren nach Anspruch 1, worin Komponente (a) ein Molverhältnis von Melamin zu Formaldehyd im Bereich von 1:1,5 bis 1:2,5 aufweist.

3. Verfahren nach Anspruch 2, worin das Molverhältnis von Melamin zu Formaldehyd im Bereich von 1:1,6 bis 1:2 liegt.

4. Verfahren nach einem der Ansprüche 1 bis 3, worin das Melamin-Phenol-Formaldehyd-Harz 0,1 bis 0,4, vorzugsweise 0,15 bis 0,20 Mol Phenol pro Mol Melamin enthält.

5. Verfahren nach Anspruch 1, worin der organische Füllstoff (b) Cellulose und/oder Holzmehl ist.

6. Verfahren nach Anspruch 1, worin der anorganische Füllstoff (b) Lithopone, Calciumcarbonat, Bariumsulfat oder Kaolin ist.

7. Verfahren nach Anspruch 1, worin das Gleitmittel (c) Calciumstearat oder Zinkstearat ist.

8. Verfahren nach Anspruch 1, wobei die Spritzgussformmasse 35 bis 70, vorzugsweise 45 bis 55, Gew.% der Komponente (a), 0 bis 40, vorzugsweise 20 bis 30 Gew.% des organischen Füllstoffs (b) und 0 bis 30, vorzugsweise 10 bis 25, Gew.% des anorganischen Füllstoffs

(b), 0,2 bis 2, vorzugsweise 0,4 bis 0,8, Gew.% des Gleitmittels (c) und 0,2 bis 1,5, vorzugsweise 0,3 bis 1,2, Gew.% des Härters (d) bezogen auf die Gesamtmasse, enthält.

9. Verfahren nach Anspruch 1, welche zusätzlich zu den Komponenten (a) bis (d) noch Farbstoffe, Pigmente, Verstärkungsmittel und/oder von Melaminharzen verschiedene Kunststoffe enthält.

10. Spritzgussformmasse enthaltend
(a) ein Melamin-Formaldehyd-Harz, ein Melamin-Phenol-Formaldehyd-Harz oder ein Gemisch dieser Harze,
(b) organische und/oder anorganische Füllstoffe,
(c) Gleitmittel und ;
(d) 0,1 bis 2 Gew.%, bezogen auf die Gesamtmasse, 3-Chlor-1,2-propandiol als latenten Härter.

11. Verwendung der Formmasse nach Anspruch ; 10 zur Herstellung von Formkörpern mittels Spritzguss bei Formtemperaturen von 150 bis 200 ° C, vorzugsweise von 165 bis 190°C.

12. Verwendung der Formmasse nach Anspruch ; 11 zur Herstellung von Formkörpern mittels Spritzguss bei Zykluszeiten von 20 bis 50, vorzugsweise 25 bis 35, Sekunden.

13. Formkörper hergestellt nach Anspruch 11 oder ; 12.

## Claims (Claims for the following Contracting State(s) : AT, BE, DE, FR, GB, IT, SE)

1. An injection moulding composition comprising
(a) a melamine/formaldehyde resin, a melamine/phenol/formaldehyde resin or a mixture of said resins,
(b) organic and/or inorganic fillers,
(c) a lubricant, and
(d) 0.1 to 2% by weight, based on the entire composition, of 3-chloro-1,2-propanediol as latent hardener. ₁

2. A moulding composition according to claim 1, wherein the molar ratio of melamine to formaldehyde in component (a) is in the range from 1:1.5 to 1:2.5. ₁

3. A moulding composition according to claim 2, wherein the molar ratio of melamine to formaldehyde is in the range from 1:1.6 to 1:2.

4. A moulding composition according to any one of claims 1 to 3, wherein the melamine/phenol/formaldehyde resin contains 0.1 to 0.4 mol, preferably 0.15 to 0.20 mol, of phenol per mole of melamine.

5. A moulding composition according to claim 1, wherein the organic filler (b) is cellulose and/or wood flour.

6. A moulding composition according to claim 1, wherein the inorganic filler (b) is lithopone, calcium carbonate, barium sulfate or kaolin.

7. A moulding composition according to claim 1, wherein the lubricant (c) is calcium stearate or zinc stearate.

8. A moulding composition according to claim 1, comprising 35 to 70% by weight, preferably 45 to 55% by weight, of component (a), 0 to 40% by weight, preferably 20 to 30% by weight, of organic filler (b), and 0 to 30% by weight, preferably 10 to 25% by weight, of inorganic filler (b), 0.2 to 2% by weight, preferably 0.4 to 0.8% by weight, of lubricant (c), and 0.2 to 1.5% by weight, preferably 0.3 to 1.2% by weight, of hardener (d), based on the entire composition.

9. A moulding composition according to claim 1, which, in addition to components (a) to (d), further contains dyes, pigments, reinforcing agents and/or plastics other than melamine resins.

10. Use of a moulding composition according to claim 1 for the production of mouldings by injection moulding at a mould temperature from 150 to 200 °C, preferably from 165 to 190_{°}C.

11. Use of a moulding composition according to claim 1 for the production of mouldings by injection moulding at cycle times of 20 to 50, preferably 25 to 35, seconds.

12. A moulding produced according to claim 10 or 11.

## Claims (Claims for the following Contracting State(s) : ES)

1. A process for the production of a cured product by heating an injection moulding composition comprising
(a) a melamine/formaldehyde resin, a melamine/phenol/formaldehyde resin or a mixture of said resins,
(b) organic and/or inorganic fillers
(c) a lubricant, and
(d) 0.1 to 2% by weight, based on the entire composition, of 3-chloro-1,2-propanediol as latent hardener, at a temperature in the range from 150 to 200 _{°} C.

2. A process according to claim 1, wherein the molar ratio of melamine to formaldehyde in component (a) is in the range from 1:1.5 to 1:2.5.

3. A process according to claim 2, wherein the molar ratio of melamine to formaldehyde is in the range from 1:1.6 to 1:2.

4. A process according to any one of claims 1 to 3, wherein the melamine/phenol/formaldehyde resin contains 0.1 to 0.4 mol, preferably 0.15 to 0.20 mol, of phenol per mole of melamine.

5. A process according to claim 1, wherein the organic filler (b) is cellulose and/or wood flour.

6. A process according to claim 1, wherein the inorganic filler (b) is lithopone, calcium carbonate, barium sulfate or kaolin.

7. A process according to claim 1, wherein the lubricant (c) is calcium stearate or zinc stearate.

8. A process according to claim 1, in which the injection moulding composition comprises 35 to 70% by weight, preferably 45 to 55% by weight, of component (a), 0 to 40% by weight, preferably 20 to 30% by weight, of organic filler (b), and 0 to 30% by weight, preferably 10 to 25% by weight, of inorganic filler (b), 0.2 to 2% by weight, preferably 0.4 to 0.8% by weight, of lubricant (c), and 0.2 to 1.5% by weight, preferably 0.3 to 1.2% by weight, of hardener (d), based on the entire composition.

9. A process according to claim 1, in which the injection moulding composition, in addition to components (a) to (d), further contains dyes, pigments, reinforcing agents and/or plastics other than melamine resins.

10. An injection moulding composition comprising
(a) a melamine/formaldehyde resin, a melamine/phenol/formaldehyde resin or a mixture of said resins,
(b) organic and/or inorganic fillers,
(c) a lubricant, and
(d) 0.1 to 2% by weight, based on the entire composition, of 3-chloro-1,2-propanediol as latent hardener.

11. Use of a moulding composition according to claim 10 for the production of mouldings by injection moulding at a mould temperature from 150 to 200 °C, preferably from 165 to 190_{°}C.

12. Use of a moulding composition according to claim 11 for the production of mouldings by injection moulding at cycle times of 20 to 50, preferably 25 to 35, seconds.

13. A moulding produced according to claim 11 or 12.

## Revendications (Revendications pour l'(les) Etat(s) contractant(s) suivant(s) : suivants : AT, BE, DE, FR, GB, IT, SE)

1. Matière moulable par injection contenant
(a) une résine de mélamine-formaldéhyde, une résine de mélamine-phénol-formaldéhyde ou un mélange de ces résines,
(b) des charges organiques et/ou inorganiques,
(c) des lubrifiants et
(d) 0,1 à 2 % en masse, par rapport à la masse totale, de 3-chloro-1,2-propanediol comme durcisseur latent.

2. Matière moulable selon la revendication 1, dans laquelle le constituant (a) présente un rapport molaire de la mélamine au formaldéhyde compris entre 1:1,5 et 1:2,5.

3. Matière moulable selon la revendication 2, dans laquelle le rapport molaire de la mélamine au formaldéhyde est compris entre 1:1,6 et 1:2.

4. Matière moulable selon l'une des revendications 1 à 3, dans laquelle la résine de mélamine-phénol-formaldéhyde contient de 0,1 à 0,4, de préférence de 0,15 à 0,20 mole de phénol par mole de mélamine.

5. Matière moulable selon la revendication 1, dans laquelle la charge organique (b) est de la cellulose et/ou de la sciure de bois.

6. Matière moulable selon la revendication 1, dans laquelle la charge inorganique (b) est du lithopone, du carbonate de calcium, du sulfate de baryum ou du kaolin.

7. Matière moulable selon la revendication 1, dans laquelle le lubrifiant (c) est du stéarate de calcium ou du stéarate de zinc.

8. Matière moulable selon la revendication 1, contenant de 35 à 70, de préférence de 45 à 55 % en masse du constituant (a), de 0 à 40, de préférence de 20 à 30 % en masse de charge organique (b) et de 0 à 30, de préférence de 10 à 25 % en masse de charge inorganique (b), de 0,2 à 2, de préférence de 0,4 à 0,8 % en masse de lubrifiant (c) et de 0,2 à 1,5, de préférence de 0,3 à 1,2 % en masse de durcisseur (d), par rapport à la matière totale.

9. Matière moulable selon la revendication 1, qui contient, en plus des constituants (a) à (d), des colorants, des pigments, des agents renforçants et/ou des matières plastiques différentes des résines de mélamine.

10. Utilisation de la matière moulable selon la revendication 1 pour la fabrication d'objets moulés par moulage par injection à des températures de moulage de 150 à 200 _{°} C, de préférence de 165 à 1900 C.

11. Utilisation de la matière moulable selon la revendication 1 pour la fabrication d'objets moulés par moulage par injection avec des temps de cycles de 20 à 50, de préférence de 25 à 35 secondes.

12. Objets moulés fabriqués selon la revendication 10 ou 11.

## Revendications (Revendications pour l'(les) Etat(s) contractant(s) suivant(s) : suivant : ES)

1. Procédé de fabrication de produits durcis par chauffage d'une matière moulable par injection contenant
(a) une résine de mélamine-formaldéhyde, une résine de mélamine-phénol-formaldéhyde ou un mélange de ces résines,
(b) des charges organiques et/ou inorganiques,
(c) des lubrifiants et
(d) 0,1 à 2 % en masse, par rapport à la masse totale, de 3-chloro-1,2-propanediol comme durcisseur latent, à une température comprise entre 150 et 200 _{°} C.

2. Procédé selon la revendication 1, dans lequel le constituant (a) présente un rapport molaire de la mélamine au formaldéhyde compris entre 1:1,5 et 1:2,5.

3. Procédé selon la revendication 2, dans lequel le rapport molaire de la mélamine au formaldéhyde est compris entre 1:1,6 et 1:2.

4. Procédé selon l'une des revendications 1 à 3, dans lequel la résine de mélamine-phénol-formaldéhyde contient de 0,1 à 0,4, de préférence de 0,15 à 0,20 mode de phénol par mole de mélamine.

5. Procédé selon la revendication 1, dans lequel la charge organique (b) est de la cellulose et/ou de la sciure de bois.

6. Procédé selon la revendication 1, dans lequel la charge inorganique (b) est du lithopone, du carbonate de calcium, du sulfate de baryum ou du kaolin.

7. Procédé selon la revendication 1, dans lequel le lubrifiant (c) est du stéarate de calcium ou du stéarate de zinc.

8. Procédé selon la revendication 1, dans lequel la matière moulable par injection contient de 35 à 70, de préférence de 45 à 55 % en masse du constituant (a), de 0 à 40, de préférence de 20 à 30 % en masse de charge organique (b) et de 0 à 30, de préférence de 10 à 25 % en masse de charge inorganique (b), de 0,2 à 2, de préférence de 0,4 à 0,8 % en masse de lubrifiant (c) et de 0,2 à 1,5, de préférence de 0,3 à 1,2 % en masse de durcisseur (d), par rapport à la matière totale.

9. Procédé selon la revendication 1, dans lequel la matière contient, en plus des constituants (a) à (d), des colorants, des pigments, des agents renforçants et/ou des matières plastiques différentes des résines de mélamine.

10. Matière moulable par injection contenant
(a) une résine de mélamine-formaldéhyde, une résine de mélamine-phénol-formaldéhyde ou un mélange de ces résines,
(b) des charges organiques et/ou inorganiques,
(c) des lubrifiants et
(d) 0,1 à 2 % en masse, par rapport à la masse totale, de 3-chloro-1,2-propanediol comme durcisseur latent.

11. Utilisation de la matière moulable selon la revendication 10 pour la fabrication d'objets moulés par moulage par injection à des températures de moulage de 150 à 200 °C, de préférence de 165 à 190 ° C.

12. Utilisation de la matière moulable selon la revendication 11 pour la fabrication d'objets moulés par moulage par injection avec des temps de cycles de 20 à 50, de préférence de 25 à 35 secondes.

13. Objets moulés fabriqués selon la revendication 11 ou 12.
